(19) Europäisches Patentamt
European Patent Office
Office européen des brevets

(11) Publication number: **0 187 958 A2**

(12) **EUROPEAN PATENT APPLICATION**

(21) Application number: 85115790.9

(22) Date of filing: 11.12.85

(51) Int. Cl.[4]: C 08 F 2/02
C 08 J 3/24, B 29 C 39/02
G 11 B 3/70

(30) Priority: 14.12.84 JP 262911/84
14.12.84 JP 262912/84

(43) Date of publication of application:
23.07.86 Bulletin 86/30

(84) Designated Contracting States:
BE CH DE FR GB IT LI

(71) Applicant: TORAY INDUSTRIES, INC.
2, Nihonbashi-Muromachi 2-chome Chuo-ku
Tokyo 103(JP)

(72) Inventor: Saito, Masami
12-22, 2-chome Sonoyama
Otsu-shi Shiga-ken(JP)

(72) Inventor: Abe, Yoshihiro
4-8, 3-chome Karahashi-cho
Otsu-shi Shiga-ken(JP)

(72) Inventor: Fukuda, Tadanori
34-6, 2-chome, Nango
Otsu-shi Shiga-ken(JP)

(72) Inventor: Izumi, Zenji
8-13-3, 2-chome, Sonoyama
Otsu-shi Shiga-ken(JP)

(74) Representative: Kador & Partner
Corneliusstrasse 15
D-8000 München 5(DE)

(54) **Resin for information recording medium.**

(57) A resin for an information recording medium comprising a polymer characterized by having a crosslinked structure and a process for producing such a resin by charging a mold with a monomer component which comprises a monomer having at least two polymerizable double bonds and/or the prepolymer of the monomer and polymerizing the monomer component in the mold.

EP 0 187 958 A2

# RESIN FOR INFORMATION RECORDING MEDIUM

The present invention relates to a resin for an information recording medium, and more particularly to a resin for use as a substrate of an information recording medium such as video disc, compact disc, audio disc, information file disc for computer, or the like.

Information recording media such as video disc, compact disc, audio disc, information file disc for computer and the like have been developed and put to practical use with the development of an information oriented society. Transparent resins have been used as the substrate of these discs and these substrates have been usually prepared by injection or compression molding. Examples of such transparent resins used in the preparation of substrate include polyvinyl chloride, polystyrene, polymethyl methacrylate, and polycarbonate resins, among which polymethyl methacrylate and polycarbonate resins have been put to practical use as the particularly preferred resins from the viewpoints of light transmittance, moldability, birefringence index, etc.

Polymethyl methacrylate and polycarbonate resins have been particularly preferred resins for disc substrates so far. However, they have disadvantages originating from their own characteristics described as follows.

Since polymethyl methacrylate resin has a relatively high water absorption, it is liable to cause dimensional

changes by moisture absorption and a substrate prepared therefrom tends to warp or to crack by repeated drying and moisture absorption over a long period of time. In an audio disc, information signal is recorded only on one side of the disc substrate which has much larger surface area than the other side and the difference of the surface area easily exhibits a deformation such as in the form of an umbrella under high humidity conditions. Further, polymethyl methacrylate resin is liable to suffer heat softening remarkably at about 100 to 110°C. Though the resin has a merit in that a less oriented substrate than polycarbonate resin can be obtained by injection or compression molding, it has a disadvantage that the heat softening resistance is unsatisfactory.

Polycarbonate resin has a higher heat softening resistance than that of the polymethyl methacrylate resin, but it is liable to be oriented in injection or compression molding and its birefringence index is increased. Because an increased birefringence index adversely affects reproduced sound and image, it is necessary to take appropriate countermeasures for the successful use of the polycarbonate resin. They include, for example, reduction of the molecular weight to lower the melt viscosity during molding, control of the molding conditions to inhibit orientation, and recording of signals on only the central part of a disc. Though polycarbonate resin has a higher heat softening resistance than that of the polymethyl methacrylate, it suffers abrupt

heat softening at about 140°C and therefor it also has a serious problem in this respect.

An object of the present invention is to provide a resin for use as a substrate for transparent discs, which has excellent water absorptivity, heat softening resistance and birefringence index.

The resin of the present invention comprises a polymer having a crosslinked structure and, preferably, containing at least one ring selected from the group consisting of an aromatic ring, a cyclohexane ring and a heterocyclic ring as its repeating unit. Such a polymer can be obtained by cast polymerizing a monomer having at least two radical-polymerizable double bonds per molecule and, preferably, containing at least one ring selected from the group consisting of an aromatic ring, a cyclohexane ring and a heterocyclic ring as a starting metarial.

Examples of such monomers include polyallyl esters such as bisallyl terephthalate, bis(ß-methylallyl) terephthalate, bisallyl isophthalate, bis(ß-methylallyl) isophthalate, triallyl trimellitate, tri(ß-methylallyl) trimellitate, bis(allyloxycarbonylmethyl) terephthalate, bis(ß-methylallyloxycarbonylmethyl) terephthalate, diallyl 5,5'-dimethylbiphenyl-3,3'-dicarboxylate, diallyl 1,9-dimethoxynaphthalene-3,7-dicarboxylate and diallyl 1,1'-dimethyldiphenyl-methane- 3,3'-dicarboxylate; polyallyl carbonates

such as 1,3'-benzenebis(allyl carbonate), 1,3-benzenebis(ß-methylallyl carbonate), 1,4-benzenebis(allyl carbonate), 1,4-benzenebis(ß-methylallyl carbonate), 1,5-naphthalenebis(allyl carbonate), 1,5-naphthalenebis(ß-methylallyl carbonate),1,6-naphthalenebis(allyl carbonate), 1,6-naphthalenebis(ß-methylallyl carbonate), 1,7-naphthalenebis(allyl carbonate), 1,7-naphthalenebis(ß-methylallyl carbonate), 2,6-naphthalenebis-(allyl carbonate), 2,6-naphthalenebis(ß-methylallyl carbonate), 2,7-naphthalenebis(allyl carbonate), 2,7-naphthalenebis(ß-methylallyl carbonate), 4,4'-diphenylpropanebis(allyl carbonate), 4,4'-diphenylpropanebis(ß-methylallyl carbonate), 4,4'-diphenylsulfonebis(allyl carbonate), and 4,4'-diphenylsulfonebis(ß-methylallyl carbonate), 1,3-bis(hydroxyethoxy)benzene bis(allyl carbonate), 1,3-bis(hydroxyethoxy)benzene bis(ß-methylallyl carbonate), 1,4-bis(hydroxyethoxy)benzene bis(allyl carbonate), 1,4-bis(hydroxyethoxy)benzene bis(ß-methylallyl carbonate), 1,5-bis(hydroxyethoxy)naphthalene bis(allyl carbonate), 1,5-bis(hydroxyethoxy)naphthalene bis(ß-methylallyl carbonate), 1,6-bis(hydroxyethoxy)naphthalene bis(allyl carbonate), 1,6-bis(hydroxyethoxy)naphthalene bis(ß-methylallyl carbonate), 1,7-bis(hydroxyethoxy)-naphthalene bis(allyl carbonate), 1,7-bis(hydroxyethoxy)-naphthalene bis(ß-methylallyl carbonate), 2,6-bis(hydroxy-ethoxy)naphthalene bis(allyl carbonate), 2,6-bis(hydroxy-ethoxy)naphthalene bis(ß-methylallyl carbonate), 2,7-bis(hydroxyethoxy)naphthalene bis(allyl carbonate), 2,7-

bis(hydroxyethoxy)naphthalene bis(ß-methylallyl carbonate), 4,4'-bis(hydroxyethoxy)diphenylpropane bis(allyl carbonate), 4,4'-bis(hydroxyethoxy)diphenylpropane bis(ß-methylallyl carbonate), 4,4'-bis(hydroxyethoxy)diphenylsulfone bis(allyl carbonate), 4,4'-bis(hydroxyethoxy)diphenylsulfone bis(ß-methylallyl carbonate; poly(meth)acrylates such as 1,4-diacryloxybenzene, 1,4-dimethacryloxybenzene, 1,4-diacryloxy-ethoxybenzene, 1,4-dimethacryloxyethoxybenzene, 1,5-diacryloxynaphthalene, 1,5-dimethacryloxynaphthalene, 1,5-bis(ß-acryloxyethoxy)naphthalene, 1,5-bis(ß-methacryloxy-ethoxy)naphthalene, 2,2'-bis(acryloxy)biphenyl, 2,2'-bis(methacryloxy)biphenyl, 2,2'-bis(ß-acryloxyethoxy)-biphenyl, 2,2'-bis(ß-methacryloxyethoxy)biphenyl, 2,2'-bis(4-acryloxyphenyl)propane, 2,2-bis(4-mehthacryloxyphenyl)-propane, 2,2-bis(4-acryloxyethoxyphenyl)propane, 2,2-bis(4-methacryloxyethoxyphenyl)propane, 2,2'-bis(4-acryloxypolyethoxyphenyl)propane, 2,2-bis(4-methacryloxypolyethoxyphenyl)propane, 2,2-bis(4-acryloxyethoxydiphenyl)sulfone, 2,2'-bis(methacryloxyphenyl)sulfone, 2,2'-bis(3-acryloyl-2-hydroxypropoxy)biphenyl, 2,2'-bis(3-methacryloyl-2-hydroxy-propoxy)biphenyl, 2,2'-bis(3-acryloyl-2-hydroxypropoxy-phenyl)propane and 2,2'-bis(3-methacryloyl-2-hydroxypropoxy-phenyl)propane; and polyvinil compounds such as divinylbenzene and divinylnaphthalene. Derivatives of these compounds where the aromatic ring has a halogen substituent may also be used. As examples of such monomers, there can be mentioned 1,4-dimethacryloxy-2,3,5,6-tetrabromobenzene, 1,4-dimethacryloxy-2,3,5,6-tetrachlorobenzene. di(2-acryloxyethyl) tetrabromophthalate, 1,5-diacryloxy-2,4,6,8-tetrachloronaphthalene, 1,5-diacryloxy-2,4,6,8-tetrabromonaphthalene.

Examples of the monomers having a cyclohexane ring include cis-1,2-divinylcyclohexane, trans-1,2-divinylcyclohexane, and 1,2,4-trivinylcyclohexane.

Examples of the monomers having a heterocyclic ring include triallyl cyanurate, triallyl isocyanurate, diallyl chlorendate, bis(ß-methylallyl)chlorendate, divinylpyridine and 3,9-divinyl-2,4,8,10-tetraoxaspiro(5,5)undecane.

These monomers may be used either alone or as a mixture of two or more of them.

Among the foregoing compounds, divinylbenzene, diallyl isophthalate, 1,3-benzenebis(allylcarbonate), cis-1,2-divinylcyclohexane, diallyl chlorendate, 2,2-bis(4-acryloxyethoxy phenyl) propane, 2,2-bis(4-methacryloxyethoxy phenyl)-propane, 2,2-bis(4-acryloxyethoxy-3,5-dibromophenyl)propane, 2,2-bis(4-methacryloxyethoxy-3,5-dibromophenyl)propane, and mixtures thereof are preferred.

When a monomer contains a functional group such as -OH, -NCO, -COOH, $-NH_2$ or epoxy even though it has only one radical-polymerizable double bond per molecule, a monomer compound having a plurality of double bonds formed by intermolecular bonding of the above monomer through said functional group may be used alone or as a mixture.

Examples of such monomer compounds include an adduct of

2 mol of 1-vinyl-4-hydroxybenzene with 1 mol of hexamethylene diisocyanate, an adduct of 2 mol of bisphenol A monoacrylate with 1 mol of xylylene diisocyanate, an adduct of 2 mol of methacrylic acid with 1 mol of 2,2-bis(4-glycidoxyphenyl)-propane, an adduct of 1 mol of 4-hydroxyphenyl methacrylate with 1 mol of glycidyl methacrylate, an adduct of 2 mol of vinylacetic acid with 1 mol of xylylenediamine, an adduct of 2 mol of 2-(4-hydroxyethoxy phenyl)-2-(4-acryloxyethoxy phenyl)propane with 1 mol of hexamethylene diisocyanate, an adduct of 2 mol of 2-(4-hydroxyethoxy phenyl)-2-(4-methacryloxy ethoxy phenyl)propane with 1 mol of hexamethylene diisocyanate, an adduct of 2 mol of 2-(4-hydroxyethoxy-3,5-dibromophenyl)-2-(4-acryloxyethoxy-3,5-dibromophenyl)propane with 1 mol of hexamethylene diisocyanate, and an adduct of 2 mol of 2-(4-hydroxyethoxy-3,5-dibromophenyl)-2-(4-methacryloxyethoxy- 3,5-dibromophenyl)propane with 1 mol of hexamethylene diisocyanate.

Among the foregoing compounds, an adduct of 2 mol of 2-(4-hydroxyethoxy phenyl)-2-(4-meth)acryloxyethoxy phenyl)-propane with 1 mol of hexamethylene diisocyanate. An adduct of 2 mol of 2-(4-hydroxyethoxy-3,5-dibromophenyl)-2-(4-(methacryloxyethoxy-3,5-dibromophenyl)propane with 1 mol of hexamethylene diisocyanate and mixtures thereof are preferred.

Generally, a birefringence index will be increased when a resin contains a cyclic moiety such as an aromatic, cyclohexane, or heterocyclic ring. It is a characteristic

feature of this invention, however, that the resin of the present invention has a remarkably low birefringence index as compared with those prepared by injection or compression molding, even when it has an above-mentioned ring. This is because the resin of the present invention can be produced by cast polymerization.

The resin of the present invention for use as a disc substrate must have a water absorption of 0.5% or below from the viewpoint of dimensional stability. Preferably, the water absorption should be 0.02 to 0.2%.

The aromatic, cyclohexane, or heterocyclic ring in the resin has a remarkable effect of lowering water absorption, which is reduced in proportion to the number of such rings. For that puepose, a polyfunctional aliphatic monomer having a radical-polymerizable double bond may be added to lower the water absorption to a desired value. Examples of such monomers are ethylene glycol bis(allyl carbonate), diethylene glycol bis(allyl carbonate), triethylene glycol bis(allyl carbonate), tetraethylene glycol bis(allyl carbonate), ethylene glycol diacrylate, ethylene glycol dimethacrylate, diethylene glycol diacrylate, diethylene glycol dimethacrylate, triethylene glycol diacrylate, triethylene glycol dimethacrylate, neopentyl glycol diacrylate and neopentyl glycol dimethacrylate.

Preferably, the resin of the present invention for use as a disc substrate should have a heat softening resistance of 150°C or higher, because the disc must be exposed to a

high temperature when irra''iated with laser beams in information recording.

The presence of a crosslinked moiety, i.e., the presence of a polyfunctional monomer has a remarkable effect of improving the heat softening resistance, which is improved in proportion to the density of crosslinking. If desired, a monofunctional monomer having a radical-polymerizable double bond may be added to control the heat softening resistance. Examples of such monomers include styrene, vinyltoluene, benzyl acrylate, benzyl methacrylate, ethyl acrylate, ethyl methacrylate, α-naphthyl acrylate, α-naphthyl methacrylate, ß-naphthyl acrylate, ß-naphthyl methacrylate, phenyl acrylate, phenyl methacrylate and its halogen- or alkyl-subsituted derivatives, phenyl allyl carbonate, benzyl allyl carbonate, allyl benzoate, allyl naphthalenecarboxylate and its halogen substituted derivatives. In some cases, acrylonitrile, vinyl acetate, vinyl chloride and hydroxyethyl acrylate may also be used.

The raito of the monomer having at least two polymerizable double bonds used as the essential ingredient in the present invention in the copolymerization varies depending on optical and mechanical properties, but the quantity of the monomer used as the essential ingredient is not less than 1% by weight, preferably 5%, more preferably 10%. When this quantity is less than 1% by weight, a resin having a low water absorption and a high softening resistance can not be obtained. In some cases, especially when aliphtic

monomer was used, the rasio is preferably more than 30%.

The resin of the present invention is molded by using the aforementioned polyfunctional monomer as the essential ingredient and carrying out cast polymerization. Unlike injection or compression molding, solidification and polymerization are completed in a stationary state so that the orientation of the resulting resin is greatly improved and a resin having a very low birefringence index can be obtained.

The polymerization may be carried out by any of conventional methods such as radical polymerization, such as heat- or photopolymerization. Preferably, from 0.01 to 10 parts by weight of a polymerization initiator such as diisopropyl peroxydicarbonate, dimyristyl peroxydicarbonate, tert.-butyl peroxypivalate, lauroyl peroxide, tert.-butyl peroxyisobutyrate, tert.-butyl peroxyisopropyl carbonate, di-tert.-butyl peroxide, benzoyl peroxide, azobisisobutyronitrile or azobis-tert.-octane is mixed with 100 parts by weight of the aforementioned monomer or a mixture of the aforementioned various monomers. The resulting mixture is poured into a preformed mold and gradually heated to thereby complete the polymerization. If desired, the polymerization is suspended on its way to take the product in the form of a prepolymer out of the mold, and the polymerization of the prepolymer may be again carried out in the presence of the above polymerization initiator to complete the polymerization. The polymerization temperature and time vary

depending on the types and the mixing ratio of the monomers and the type of the polymerization initiator, but it is preferred to complete the polymerization at a temperature of 40 to 150°C for one to 100 hr.

The resin of the present invention may also produced by photopolymerization. From 0.01 to 10 parts by weight of a photosensitizer such as benzoin, benzoin methyl ether, benzoin ethyl ether, benzophenone, 2-hydroxy-2-methylpropiophenone, benzil dimethyl ketal, benzoin isopropyl ether, acetophenone, dimethoxyacetophenone, 1-chloroanthraquinone or 1,4-naphthoquinone may be mixed with 100 parts by weight of the aforementioned monomer or a mixture of them. The monomer or the monomer mixture is then irradiated with a sunlamp or mercury vapor lamp to effect polymerization. If desired, a polymerization initiator may be used together with the photosensitizer.

In the molding of the resin of the present invention for disc substrate, additives such as antistatic agent, discoloration inhibitor, surface smoothing agent, ultraviolet light absorber and antioxidant may be added in addition to the aforementioned ingredients to increase the utility of the product. Examples of the antistatic agent include nonionic surfactants and quaternary ammonium salts. Examples of the discoloration inhibitor include triphenyl-phosphine, triphenylantimony and triphenylarsenic. Examples of the surface smoothing agent include silicone compounds, fluorine-containing surfactants and organic surfactants. Examples of

the ultraviolet light absorber include 2-(hydroxy- 5-methylphenyl)benzotrizole, 2-(hydroxy-5-tert.-butylphenyl)-benzotriazole, 2-(3'5-di-tert.-butyl-2-hydroxyphenyl)-benzotriazole and 2-hydroxy-4-n-octoxybenzophenone. Examples of the antioxidant include hindered phenols and hindered amines. A dye or a pigment may be added to the resin of the present invention to color it, so far as the transparency of the resin as disc substrate is not deteriorated. These additives may be added to the monomer or the monomer mixture before the beginning of the polymerization. Alternatively, they may be added to a prepolymer during the course of the polymerization.

The resin of the present invention has a crosslinked structure and comprises, as its essential component, a polymer containing at least one ring selected from the group consisting of an aromatic ring, a cyclohexane ring and a heterocyclic ring as its repeating unit and hence it has low water absorption, good dimensional stability and good heat resistance. Thus it can be consistently used as information recording medium. Further, the resin of the present invention is essentially prepared by cast polymerization, so that there can be obtained a resin having low birefringence index suitable for use as a disc substrate. Thus the crystal orientation is very low and an information recording medium having desirable properties can be obtained.

The following examples will further illustrate the present invention, though they are not to be construed as

limiting the present invention in any way. In the following examples and comparative examples, the physical properties were measured by the following test methods.

(1) Water absorption: measured according to ASTM-D570.
Sample diameter: 5.08 cm X 0.32 cm in thickness
Condition of immersion: 23°C for 24 hr

(2) Heat softening resistance: measured by Vicat softening test method according to ASTM-D1525.
The temperature of the sample was eleveted to 150°C and the depth of penetration of a needle was measured.
Criterion was as follows:
A: the depth of penetration of a needle was 0.1 mm or below (good),
B: the depth of penetration of a needle exceeded 0.1 mm, but was 1.0 mm or below, and
C: the depth of penetration of a needle exceeded 1.0 mm (bad).

(3) Birefringence index: measured on a single path by using He-Ne laser beams with an automatic ellipsometer DVA-36L.

Example 1

20% by weight of methyl methacrylate was added to 80% by weight of divinylbenzene. The mixture was mixed with each other at room temperature to dissolve them in each other. 0.1% by weight of di-tert.-butyl peroxide as polymerization initiator was thoroughly mixed with the above mixture and

dissolved gases such as air were removed under vacuum. The mixture was poured into a mold made of glass plates and a polyethylene gasket. Polymerization was started at 40°C and the temperature was gradually elevated to 110°C over a period of 40 hr to thereby complete the polymerization. The resulting resin was colorless and transparent and had such excellent properties that the water absorptivity was 0.05%, the heat softening resistance was on level A (with the depth of penetration of a needle being 0.1 mm or below even when heated to 150°C in the Vicat heat softening test) and Δnd was as very low as 1.5 nm. The results are shown in Table 1.

Example 2

Cast polymerization was repeated in the same manner as in Example 1 except that 20% by weight of divinyl-benzene and 80% by weight of methyl methacrylate were used. The results are shown in Table 1.

Example 3

20% by weight of ethylene glycol diacrylate was added to 80% by weight of diallyl isophthalate and the mixture was heated at 50°C for dissolution. 0.5% by weight of dimyristyl peroxydicarbonate was added thereto as polymerization initiator. The resulting mixture was thoroughly mixed and deaerated under vacuum. Cast polymerization was carried out in the same manner as in Example 1. The results are shown in Table 1.

Example 4

Cast polymerization was repeated in the same manner as in Example 1 except that 1,3-benzenebis(allyl carbonate) was used in place of divinylbenzene. The results are shown in Table 1.

Example 5

Cast polymerization was repeated in the same manner as in Example 1 except that cis-1,2-divinyl-cyclohexane was used in place of divinylbenzene. The results are shown in Table 1.

Example 6

Cast polymerization was repeated in the same manner as in Example 2 except that diallyl chlorendate was used in place of divinylbenzene. The results are shown in Table 1.

Example 7

60 parts by weight of 2,2-bis(4-methacryloxyethoxy-phenyl) propane was dissolved in 40% by weight of styrene. 0.1 part by weight of azobisisobutyronitrile as polymerization initiator was added to the resulting solution. The mixture was thoroughly mixed and dissolved gas such as air was deaerated under vaccum to carry out cell cast polymerization. The polymerization was carried out in a cell made of two glass plates, each being 200 X 200 mm with a thickness of 5 mm, and a gasket of a fluoropolymer tube. A

parting agent was applied to the surfaces of the glass plates and the cell was assembled by using the gasket in such a manner that the two glass plates was spaced apart from each other at a distance of 1.2 mm. The above monomer mixture was poured into the cell. The polymerization was started at 60°C and the temperature was gradually elevated to 110°C over a period of 40 hr to thereby complete the polymerization. The resulting resin was colorless and transparent and superior in water absorptivity and the level of heat softening resistance was on level A and had a birefringence index Δnd of as very low as 0.8 nm. The test results are shown in Table 1.

Example 8

20% by weight of divinylbenzene, 10% by weight of styrene and 70% by weight of 2,2-bis(4-acryloxyethoxy-3,5-dibromophenyl) propane were mixed together and heated to 50°C for dissolution. 0.1% by weight of di-tert.-butyl peroxide as polymerization initiator was added thereto, and the mixture was thoroughly mixed and deaerated under vacuum. Cast polymerization was carried out in a similar manner to that described in Example 7. The resulting resin had a low water absorptivity and a low birefringence index and was superior in heat resistance as well as transparency. The results are shown in Table 1.

Example 9

100 ppm of di-n-butyltin dilaurate as an NCO-OH reaction

catalyst was added to a mixture consisting of 53.1 parts by weight of 2-(4-acryloxyethoxy -3,5-dibromophenyl)-2-(4-hydroxyethoxy-3,5-dibromophenyl) propane, 6.9 parts by weight of hexamethylene diisocyanate and 40.0 parts by weight of divinylbenzene. The mixture was heated at 50°C for 2 hr and cooled to room temperature, and 0.1 part by weight by tert.-butyl peroxyisobutyrate as polymerization initiator was then added thereto. The mixture was dehydrated and deaerated under vacuum and cast polymerization was carried out in a similar manner to that described in Example 7. The resulting resin had a low water absorptivity and a low birefringence index and was superior in heat resistance as well as transparency. The results are shown in Table 1.

Comparative Example 1

20% by weight of methyl methacrylate was added to 80% by weight of styrene and the mixture was mixed at room temperature for dissolution. 0.5% by weight of azobisisobutyronitrile was added thereto as polymerization initiator. The mixture was thoroughly mixed and deaerated under vacuum and cast polymerization was carried out in the same manner as in Example 1. The results are shown in Table 1.

Comparative Example 2

30% by weight of neopentyl glycol dimethacrylate was added to 70% by weight of triethylene glycol dimethacrylate

and the mixture was mixed at room temperature for dissolution. 0.1% by weight of di-tert.-butyl peroxide was added thereto as polymerization initiator. The mixture was thoroughly mixed and deaerated under vacuum, and cast polymerization was carried out in the same manner as in Example 1. The results are shown in Table 1.

Comparative Example 3

400 g of styrene, 100 g of methyl methacrylate, 700 g of pure water and 12 g of polyvinyl alcohol as dispersant were combined in a 2ℓ separable flask equipped with a stirrer and a reflux condenser. 2.5g of azobisisobutyronitrile was dissolved in the above mixture, and polymerization was carried out at 60°C for 4 hr, then at 80°C for 2 hr and finally at 98°C for 3 hr while stirring the polymerization reaction mixture. The resulting polymer was washed with water, dehydrated and dried at 70°C. The polymer was pelletized and injection molded at a cylinder temperature of 210°C and at a mold temperature of 60°C into a disc of 12 cm in diameter and 2 mm in thickness. The test results are shown in Table 1.

The following abbreviations are used in Table 1 for brevity sake:

DVB : divinylbenzene

MMA : methyl methacrylate

DAIP : diallyl isophthalate

1GA : ethylene glycol diacrylate

BBAC : 1,3-benzene bis(allyl carbonate)

DVC : cis-1,2-divinylcyclohexane

DACl : diallyl chlorendate

BMEPP: 2,2-bis(4-methacryloxyethoxyphenyl)propane

ST : styrene

$BAEBr_2PP$: 2,2-bis(4-acryloxy-3,5-dibromophenyl)propane

$AEBr_2HEBr_2PP$: 2-(4-acryloxyethoxy-3,5-dibromophenyl-2-(4-hydroxyethoxy-3,5-dibromophenyl)propane

HMDI : hexamethylene diisocyanate

3GMA : triethylene glycol dimethacrylate

NPC : neopentyl glycol dimethacrylate

Table 1

| Example No. | Monomer Component | Method of Polymerization | Water Absorptivity (%) | Birefringence Index Δnd (nm) | Heat Softening Resistance |
|---|---|---|---|---|---|
| Example 1 | DVB-MMA | cast | 0.05 | 1.5 | A |
| Example 2 | DVB-MMA | cast | 0.15 | 2.0 | A |
| Example 3 | DAIP-1GA | cast | 0.10 | 2.2 | A |
| Example 4 | BBAC-MMA | cast | 0.18 | 1.8 | A |
| Example 5 | DVC-MMA | cast | 0.12 | 2.0 | A |
| Example 6 | DACl-MMA | cast | 0.20 | 2.5 | A |
| Example 7 | BMEPP-ST | cast | 0.07 | 0.8 | A |
| Example 8 | $BAEBr_2PP$-DVB-ST | cast | 0.05 | 1.0 | A |
| Example 9 | $AEBr_2HEBr_2PP$-HMDI-DVB | cast | 0.05 | 1.0 | A |
| Comparative Example 1 | ST-MMA | cast | 0.18 | 1.9 | C |
| Comparative Example 2 | 3GMA-NPG | cast | 2.0 | 2.3 | B |
| Comparative Example 3 | ST-MMA | injection | 0.25 | 5.0 | C |

0187958

CLAIMS:

1. A resin for an information recording medium comprising a polymer characterized by having a crosslinked structure.

2. A resin as defined in Claim 1, wherein the polymer contains a ring selected from the group consisting of an aromatic ring, a cyclohexane ring and a heterocyclic ring as its repeating unit.

3. A resin as defined in Claim 1, wherein the polymer has a water absorption of not more than 0.5%.

4. A resin as defined in Claim 1, wherein the polymer has a heat softening resistance of 150°C or above.

5. A resin as defined in Claim 1, wherein the the resin has a birefringence index of 4.0 or below.

6. A process for producing a resin for an information recording medium characterized by charging a mold with a monomer component which comprises a monomer having at least two polymerizable double bonds and/or the prepolymer of the monomer and polymerizing the monomer component in the mold.

7. A process as defined in Claim 6, wherein the monomer component of the polymer contains at least one other

monomer having one polymerizable double bond.

8. A process as defined in Claim 6, wherein the monomer component contains at least one monomer having one ring selected from the group consisting of an aromatic ring, a cyclohexane ring and heterocyclic ring.

9. A process as defined in Claim 6, wherein the monomer component of the polymer contains at least one monomer selected from the group consisting of divinylbenzene, diallyl isophthalate, 1,3-benzenebis(ally carbonate).

10. A process as defined in Claim 6, wherein the monomer having an aromatic ring is a diacrylate and/or dimethacrylate represented by the following formula I.

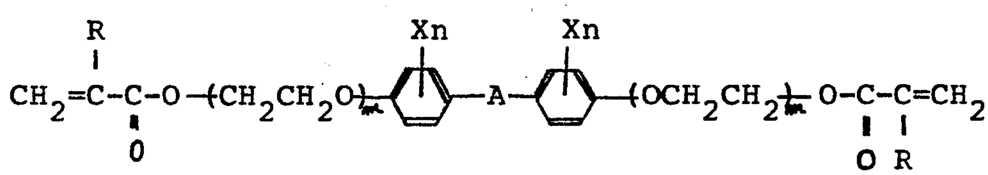 I

wherein R is H or $CH_3$, X is Cl, Br or F, n is a number of 0 to 4 , m is a number of 0 to 6 and

A is 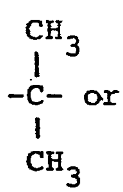 or $-SO_2-$.

11. A process as defined in Claim 6, wherein the monomer having a cyclohexane ring is cis-1,2-divinylcyclohexane.

12. A process as defined in Claim 6, wherein the monomer having a heterocyclic ring is diallyl chlorendate.

13. A process as defined in Claim 6, wherein the monomer is a isocyanate modified monomer represented by the following formula II.

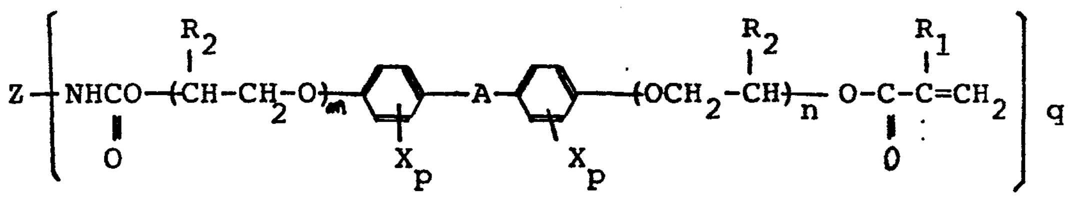

II

wherein each of $R_1$ and $R_2$ is a methyl group or hydrogen, X is chlorine, bromine or Pluorine, Z is a polyfunctional isocyanate residue,

A is 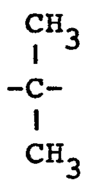 and m and n are integers of from 0 to 4 with the proviso that the sum of m and n is an integer of from 0 to 4, p is an integer of from 0 to 4, and q is an integer of from 2 to 3.

14. A process as defined in Claim 7, wherein the monomer having one polymerizable double bond is an aromatic monomer, an alicyclic monomer or an aliphatic monomer.

15. A process as defined in Claim 7, wherein the monomer component comprising at least 5 weight % of the monomer having at least two polymerizable double bond and not more than 95 weight % of the monomer having one polymerizable

double bond.